# EUROPÄISCHE PATENTSCHRIFT

(11) **EP 3 366 502 B1**
(45) Veröffentlichungstag und Bekanntmachung des Hinweises auf die Patenterteilung: **17.05.2023**
(21) Anmeldenummer: 18157379.1
(22) Anmeldetag: 19.02.2018
(51) Int. Cl.: B60H 1/00, B60H 1/32, B61D 27/00

(54) **KLIMAANLAGE FÜR EIN FAHRZEUG**
AIR CONDITIONING SYSTEM FOR A VEHICLE
INSTALLATION DE CLIMATISATION POUR UN VÉHICULE

(30) Priorität: 27.02.2017 DE 102017001914
(43) Veröffentlichungstag der Anmeldung: 29.08.2018
(73) Patentinhaber: Liebherr-Transportation Systems GmbH & Co. KG, 2100 Korneuburg (AT)
(72) Erfinder: Presetschnik, Andreas, 1160 Wien (AT)
(74) Vertreter: Laufhütte, Dieter

(56) Entgegenhaltungen:
- EP-A1- 1 479 546
- EP-A1- 1 842 703
- DE-A1-102014 215 574

## Beschreibung

Die Erfindung betrifft eine Klimaanlage für ein Fahrzeug und insbesondere ein Schienenfahrzeug mit einem Kältemittelkreislauf, der einen Kompressor, einen Außenwärmetauscher, eine Drossel und einen Innenwärmetauscher aufweist.

Gattungsgemäße Klimaanlagen für beispielsweise Schienenfahrzeuge umfassen im Allgemeinen einen Kältemittelkreislauf, der für einen Betrieb mit einem Prozessgas wie beispielsweise CO₂ oder Fluorkohlenwasserstoff (HFKW) als Kältemittel ausgelegt ist. In Anlagen mit CO₂ als Kältemittel kann im Falle hoher Umgebungstemperaturen das Problem auftreten, dass der Stillstandsdruck des Prozessgases im Kältekreis über den für die Anlage oder für einzelne Anlagenabschnitte definierten maximalen Betriebsdruck steigt. Im Stillstand kann die Umgebungstemperatur deutlich über die normale Außentemperatur ansteigen, beispielsweise durch Sonneneinstrahlung auf das Zugdach bei Klimaanlagen, die unter einem Zugdach aus Metall verbaut sind, oder durch Sonneneinstrahlung auf Gleisbett bei Klimaanlagen, die als Unterflurklimaanlagen in Zügen verbaut sind.

Dementsprechend sind aus dem Stand der Technik Sicherheitseinrichtungen bekannt, die ein Ansteigen des Kältemitteldruckes über einen bestimmten Schwellenwert verhindern. Beispiele umfassen Berstscheiben oder Sicherheitsventile, die bei Übersteigen eines Schwellenwertes bersten oder aufgedrückt werden, sodass Prozessgas in die Umgebung austreten kann, und die im Kältemittelkreislauf verbauten Komponenten so vor zu hohen Drücken schützen. Wird eine Berstscheibe geöffnet, ist vor dem erneuten Betrieb der Klimaanlage die Berstscheibe zu tauschen und der Kreislauf neu mit Kältemittel zu befüllen. Im Falle eines Sicherheitsventils wird nur ein Teil der Kältemittelfüllmenge an die Umgebung freigesetzt. Somit kann auch nach einem Hochdruckereignis noch ein eingeschränkter Betrieb der Klimaanlage mit geringerer Kälteleistung erfolgen, es besteht aber trotzdem die Notwendigkeit einer Neubefüllung, um den uneingeschränkten Betrieb wieder zu gewährleisten.

Ferner aus dem Stand der Technik bekannt ist die Möglichkeit einer Begrenzung der Füllmenge bezogen auf das innere Volumen des Kältekreises, um sicherzustellen, dass bei maximal denkbaren Umgebungstemperaturen bei Anlagenstillstand der Druck im zulässigen Bereich bleibt. Dies hat allerdings potentielle Einschränkungen der Leistungsfähigkeit zur Folge oder erfordert künstliche Vergrößerung des Innenvolumens des Kältemittelkreislaufs durch die Integration eines Druckbehälters, was sich negativ auf Masse und notwendigen Bauraum für den Kältemittelkreislauf auswirken kann.

Des Weiteren ist es aus dem Stand der Technik bekannt, ein aktives Kühlsystem vorzusehen, um den Kältemittelkreislauf bei Stillstand kühlen zu können, sozusagen also eine kleine Klimaanlage für die große Klimaanlage vorzusehen. Dies hat den offensichtlichen Nachteil not notwendiger Masse und Bauraum und höherer Bau- und Betriebskosten sowie eines hohen Stromverbrauchs bei Einsatz.

Eine gattungsgemäße Fahrzeugsklimaanlage ist aus der EP 1 479 546 A1 bekannt. Des Weiteren wird auf die Offenbarung der De 10 2014 215 574 A1 und der EP 1 842 703 A1 verwiesen.

Aufgabe der Erfindung ist es, eine Maßnahme aufzufinden, die eine übermäßige Erhöhung des Stillstandsdruckes bei hohen Umgebungstemperaturen im Kältemittelkreislauf verhindern oder zumindest verzögern kann und gleichzeitig die Nachteile der bekannten Lösungen vermeidet.

Diese Aufgabe wird mit einer Klimaanlage für ein Fahrzeug und insbesondere ein Schienenfahrzeug mit den Merkmalen des Anspruchs 1 gelöst. Besondere Vorteile der Erfindung ergeben sich aus den sich an den Hauptanspruch anschließenden Unteransprüchen.

Demnach betrifft die Erfindung eine Klimaanlage für ein Fahrzeug und insbesondere ein Schienenfahrzeug mit einem Kältemittelkreislauf, der einen Kompressor, einen Außenwärmetauscher, eine Drossel und einen Innenwärmetauscher aufweist, wobei am Innenwärmetauscher ein Ventilator vorgesehen ist. Erfindungsgemäß ist vorgesehen, dass die Klimaanlage so ausgebildet ist, dass der Ventilatorbetrieb bei Stillstand der Klimaanlage aufgenommen wird, wenn der Innendruck des Kältemittelkreislaufs einen unterhalb des maximalen Betriebsdrucks liegenden Druckschwellenwert und/oder die Umgebungstemperatur der Klimaanlage einen definierten Temperaturschwellenwert übersteigt.

Unter dem Außenwärmetauscher wird der Wärmetauscher verstanden, der im verbauten Zustand der Klimaanlage Wärme mit der Umgebung des Fahrzeugs austauscht. Im Kühlbetrieb der Klimaanlage handelt es sich dabei um den warmen Wärmetauscher, der Wärme an die Umgebung abgibt. Der Innenwärmetauscher tauscht im verbauten Zustand der Klimaanlage Wärme mit der Kabine des Fahrzeugs aus. Im Kühlbetrieb der Klimaanlage handelt es sich dabei um den kalten Wärmetauscher, der Wärme aus der Kabine aufnimmt.

In einer Ausführungsform ist vorgesehen, dass ein Drucksensor zur Bestimmung des Innendrucks im Kältemittelkreislauf und/oder ein Temperatursensor zur Bestimmung der Umgebungstemperatur der Klimaanlage vorgesehen ist und dass ferner eine Steuereinheit vorgesehen ist, die mit dem Ventilator in Verbindung steht.

In einer anderen Ausführungsform ist ein Druckschalter vorgesehen, der mit einer Stromversorgung des Ventilators in Verbindung steht und so ausgebildet ist, dass der Ventilator bestromt wird, wenn der Innendruck des Kältemittelkreislaufs einen unterhalb des maximalen Betriebsdrucks liegenden Druckschwellenwert übersteigt. Diese passive Art der Regelung kann vorteilhaft sein, da kein Betrieb einer Steuereinheit erforderlich ist und da eine geringe Fehleranfälligkeit besteht.

Bei dem Druckschwellenwert handelt es sich um einen fiktiven Wert, der in einer Steuereinheit hinterlegt ist oder der an einem Druckschalter voreingestellt ist. Er kann beispielsweise demjenigen Druck entsprechen, der im normal, d.h., gemäß herstellerseitiger Empfehlung befüllten Kältemittelkreislauf bei einer bestimmten, fiktiven Temperatur herrscht, die beispielsweise zwischen 45°C und 70°C oder zwischen 50°C und 60°C liegt. Der maximale Betriebsdruck ist herstellerseitig vorgegeben und variiert von Anlage zu Anlage. Oberhalb des maximalen Betriebsdrucks kann es zu einer Beschädigung der Komponenten des Kältemittelkreislaufs kommen.

In einer Ausführungsform ist vorgesehen, dass der druckbezogene Schwellenwert zur Betriebsaufnahme des Ventilators zwischen dem Stillstandsdruck bei Normaltemperatur und dem maximalen Betriebsdruck liegt. Der Stillstandsdruck bei Normaltemperatur ist derjenige Drucks, der im normal befüllten und stehenden Kältemittelkreislauf bei normalen Umgebungstemperaturen von beispielsweise bis zu 45°C herrscht. Dieser Druck kann wie auch der maximale Betriebsdruck von Anlage zu Anlage variieren.

Als Umgebungstemperatur ist die Temperatur in unmittelbarer Umgebung der Klimaanlage zu verstehen. Der Temperatursensor soll so ausgebildet sein, dass er diese Temperatur direkt misst oder eine Temperatur misst, die direkte Rückschlüsse auf die Umgebungstemperatur zulässt. Die Normaltemperatur kann beispielsweise alle Temperaturen von bis zu 45°C umfassen.

Der Temperaturschwellenwert ist ein fiktiver Wert, der in der Steuereinheit hinterlegt ist. Er kann beispielsweise einer Temperatur entsprechen, die zwischen 40°C und 70°C oder zwischen 50°C und 60°C liegt. Er wird so gewählt, dass er unterhalb einer anlagenspezifischen kritischen Temperatur liegt, die in einem gemäß herstellerseitiger Empfehlung befüllten Kältemittelkreislauf mit gegebenem Verhältnis von Kältemittelfüllmenge zu Innenvolumen zu einem kritischen Anlagendruck korrespondiert. Bei typischen Klimaanlagen können die kritischen Temperaturen beispielsweise bei etwa 60°C bis 70°C liegen. Der Schwellenwert liegt aber typischerweise oberhalb einer noch als normal einzustufenden Temperatur von 40°C, die oft erreicht wird.

Liegt die Lufttemperatur in der Fahrzeugkabine unterhalb der kritischen Temperaturen kann erfindungsgemäß durch erzwungen Konvektion am Innenwärmetauscher positiv auf die Kältemitteltemperatur und somit auch auf den Stillstandsdruck eingewirkt werden. So werden bereits in der Klimaanlage vorhandene Komponenten genützt, um den Stillstandsdruck bei hohen Umgebungstemperaturen im Bedarfsfall zu senken, damit beispielsweise Sicherheitseinrichtungen wie Berstscheiben oder Sicherheitsventil nicht ausgelöst werden.

Der Stillstandbetrieb des dem Innenwärmetauscher zugeordneten Ventilators kann auch deshalb besonders effektiv sein, da bei beispielsweise modernen Personenzügen die Innenraumtemperatur geringer als die Außentemperatur ist, sofern sich der Zug noch nicht zu lange im Stillstand bzw. außer Betrieb befindet. Ferner ist der dem Innenwärmetauscher zugeordneten Ventilator in modernen Schienenfahrzeugen meist standardmäßig mit der Fahrzeugbatterie verbunden, um auch bei einem Ausfall der Energieversorgung am Zug noch einen Notfallbetrieb zu ermöglichen. Somit ist keine Änderung der Fahrzeugkonstruktion notwendig, um zu erreichen, dass der erfindungsgemäße Stillstandbetrieb des Ventilators realisiert werden kann.

In einer Ausführungsform ist vorgesehen, dass ein Photovoltaikmodul vorgesehen ist, das direkt oder über eine zwischengelagerte Batterie mit dem Ventilator in Verbindung steht. So kann auch unabhängig von der Fahrzeugbatterie bzw. unter Schonung der Fahrzeugbatterie ein Stillstandbetrieb des Ventilators realisiert werden. Ein Photovoltaikmodul eignet sich im gegebenen Kontext deshalb besonders gut für die Stillstandversorgung des Ventilators, da eine Neigung zur Überhitzung des Kältemittels besonders bei signifikanter Sonneneinstrahlung besteht. Diese Ausführungsform kann besonders vorteilhaft in Verbindung mit der zuvor beschriebenen passiven Art der Ansteuerung des Ventilators mittels Druckschalter eingesetzt werden, da dann der erfindungsgemäße Stillstandsbetrieb des Ventilators gänzlich ohne zentrale Stromversorgung auskommen kann. Insoweit ist in einer bevorzugten Ausführungsform vorgesehen, dass der Druckschalter an der Stromleitung zwischen Photovoltaikmodul bzw. gegebenenfalls Batterie und dem Ventilator angeordnet ist.

In einer Ausführungsform ist vorgesehen, dass es sich bei der Drossel um ein Expansionsventil handelt und dass der Kältemittelkreislauf eine Kapillare aufweist, die parallel zum Expansionsventil angeordnet ist. Im Kältemittelkreislauf der erfindungsgemäßen Klimaanlage kann der Hochdruckbereich über den Kompressor bzw. ein nachgelagertes Rückschlagventil einerseits und ein beispielsweise elektronisch gesteuertes, aktives Expansionsventil andererseits vom Niederdruckbereich getrennt sein. Wird ein Expansionsventil verwendet, das vollständig geschlossen werden kann, ist es für die Umsetzung der Erfindung besonders vorteilhaft, parallel zum Expansionsventil eine nicht absperrbare Kapillarleitung vorzusehen. Denn Voraussetzung für eine optimale Umsetzung des erfindungsgemäßen Konzepts ist ein Kältemittelkreislauf, der keine im Anlagenstillstand vom Innenwärmetauscher abgekoppelten und mit Kältemittel befüllten Abschnitte aufweist. Dies gilt insbesondere für die oben beschriebene passive Art der Umsetzung der erfindungsgemäßen Idee mit einem Druckschalter, da eine effiziente Umsetzung dann auch ohne Bestromung des Expansionsventils möglich ist.

In einer Ausführungsform ist vorgesehen, dass die Klimaanlage und insbesondere die Steuereinheit ferner so ausgebildet ist, dass der Ventilatorbetrieb bei Stillstand der Klimaanlage auch dann aufgenommen wird, wenn der Innendruck einen unteren Druckgrenzwert unterschreitet. Dieses Konzept kann einen Beitrag zur Passagiersicherheit leisten. Der untere Druckgrenzwert ist so zu wählen, dass seine Unterschreitung auf eine Leckage im Kältemittelkreislauf und auf einen Kältemittelaustritt hindeutet. Der Ventilator kann in so einem Fall betrieben werden, um bei einem möglichen Austritt des Kältemittels in den Personenaufenthaltsbereich des Fahrzeugs lokale Konzentrationen des Kältemittels zu vermeiden. Der Betrieb des Ventilators bei Unterschreiten des unteren Druckgrenzwerts kann beispielsweise einmalig für ein definiertes Zeitintervall erfolgen.

Bei dem unteren Druckgrenzwert kann es sich um einen variabel von der Steuereinheit ermittelten Druckwert handeln, der vorzugsweise deutlich unterhalb des Druckes liegt, der im normal befüllten Kältemittelkreislauf bei gegebener Umgebungstemperatur herrschen sollte.

Die Erfindung betrifft auch ein Verfahren zum Betrieb einer erfindungsgemäßen Klimaanlage, wobei vorgesehen ist, dass der Ventilatorbetrieb bei Stillstand der Klimaanlage aufgenommen wird, wenn der Innendruck einen unterhalb des maximalen Betriebsdrucks liegenden Druckschwellenwert und/oder die Umgebungstemperatur einen definierten Temperaturschwellenwert übersteigt. Bevorzugte Verfahrensmerkmale entsprechen bevorzugten Steuerbefehlen der Steuereinheit der erfindungsgemäßen Klimaanlage.

Vor dem eingangs genannten Hintergrund betrifft die Erfindung weiterhin eine Klimaanlage für ein Fahrzeug und insbesondere ein Schienenfahrzeug mit einem Kältemittelkreislauf, der einen Kompressor, einen Außenwärmetauscher, eine Drossel und einen Innenwärmetauscher aufweist. Erfindungsgemäß ist vorgesehen, dass der Kältemittelkreislauf zumindest abschnittsweise mit einem thermischen Speicher in Kontakt steht, wobei vorzugsweise vorgesehen ist, dass Abschnitte des Kältemittelkreislaufs mit einem thermischen Speicher umkleidet sind.

Diese erfindungsgemäße Maßnahme kann alleine oder gemeinsam mit der erfindungsgemäßen Maßnahme zum Stillstandsbetrieb des Ventilators zum Einsatz kommen. Der Einsatz des thermischen Speichers kann ein kritisches Ansteigen des Stillstandsdrucks bei steigender Temperatur im Idealfall um eine signifikante Zeitspanne hinauszögern. Dieser Zeitgewinn ist oftmals als ausreichende Gegenmaßnahme anzusehen, da die Stillstandszeiten von Schienenfahrzeugen bzw. die Zeitspannen, in denen ein stehendes Schienenfahrzeug der Sonne ausgesetzt ist, normalerweise zeitlich auf einige Stunden begrenzt sind.

In einer Ausführungsform ist vorgesehen, dass der thermische Speicher ein thermisches Speichermaterial und vorzugsweise ein Phasenwechselmaterial umfasst. Bei dem Phasenwechselmaterial handelt es sich vorzugsweise um ein solches Material, dessen Phasenübergang fest/flüssig bei einer Temperatur zwischen 40°C und 60°C stattfindet, mithin also oberhalb einer noch als normal einzustufenden Temperatur von beispielsweise 40°C und unterhalb einer bei typischen Klimaanlagen bereits kritischen Temperatur von beispielsweise 60°C.

In einer Ausführungsform ist vorgesehen, dass die Phasenübergangstemperatur fest/flüssig des Phasenwechselmaterials zwischen 50°C und 65°C liegt. Es kann bevorzugt sein, dass die Phasenübergangstemperatur knapp unterhalb der kritischen Temperatur typischer Klimaanlagen (60°C bis 70°C) liegt. Beispielsweise kann die Phasenübergangstemperatur weniger als 10°C oder weniger als 5°C unterhalb der kritischen Temperatur liegen.

In einer Ausführungsform ist vorgesehen, dass auch oder ausschließlich solche Abschnitte des Kältemittelkreislaufs mit dem thermischen Speicher in Kontakt stehen oder umkleidet sind, die im Niederdruckbereich des Kältemittelkreislaufs liegen, vorzugsweise zwischen Wärmetauscher und Saugseite des Kompressors. Diese Abschnitte liegen sowohl im Kühlbetrieb als auch in einem möglichen Heizbetrieb (bei Umkehr der Wärmetauscherreihenfolge durch Umschalten auf ein gegebenenfalls vorhandenes, alternatives Leitungssystem) in einem gekühlten Bereich des Kältemittelkreislaufs, dessen Temperaturniveau unterhalb der Phasenübergangstemperatur des Phasenwechselmaterials liegt. So wird das Phasenwechselmaterial im Betrieb der Klimaanlage automatisch regeneriert, und zwar unabhängig davon, ob die Klimaanlage in Heiz- oder Kühlbetrieb betrieben wird. Eine Anordnung nach dem kalten Wärmetauscher ist insbesondere dann sinnvoll, wenn es sich bei dem kalten Wärmetauscher um den Innenwärmetauscher handelt, wie es im Kühlbetrieb der Fall ist. Denn so werden die Wärmeaufnahme am kalten Wärmetauscher bzw. die Abkühlung des kalten Wärmetauschers nicht behindert. Vorzugsweise ist vorgesehen, dass auch oder ausschließlich das Saugrohr des Kältemittelkreislaufs und/oder ein Flüssigkeitsabscheider des Kältemittelkreislaufs, der im Niederdruckbereich des Kältemittelkreislaufs zwischen Wärmetauscher und Saugseite des Kompressors angeordnet ist, mit dem thermischen Speicher in Kontakt steht oder umkleidet ist.

Die erfindungsgemäßen Maßnahmen können auch zusätzlich zu den aus dem Stand der Technik bekannten Maßnahmen zum Einsatz kommen. Beispielsweise kann der Kältemittelkreislauf der erfindungsgemäßen Klimaanlage ferner mit einer Berstscheibe oder einem Sicherheitsventil ausgestattet sein. Durch die erfindungsgemäßen Maßnahmen wird das Sicherheitsventil bzw. die Berstscheibe seltener aktiviert, bleibt aber als Notfalleinrichtung weiterhin erhalten. Ferner kann vorgesehen sein, dass der Kältemittelkreislauf der erfindungsgemäßen Klimaanlage einen Druckbehälter zur Vergrößerung des Innenvolumens aufweist, um ein Ansteigen des Stillstandsdruckes bei hohen Umgebungstemperaturen zusätzlich einzudämmen.

In einer Ausführungsform ist vorgesehen, dass das Kältemittel des Kältemittelkreislaufs CO₂ ist oder beinhaltet. Bei einer Verwendung von CO₂ als Prozessgas können maximale Betriebsdrücke des Kältemittelkreislaufs bei etwa 120 bis 140 bar liegen. Entsprechend kann der Druckschwellenwert beispielsweise zwischen 80 und 100 bar festgelegt sein.

Letztlich betrifft die Erfindung vor dem eingangs genannten Hintergrund ein Fahrzeug und insbesondere Schienenfahrzeug mit einer erfindungsgemäßen Klimaanlage. Alternativ zu einem Schienenfahrzeug wie beispielsweise einem Zug kann es sich bei dem erfindungsgemäßen Fahrzeug auch um ein anderes Landfahrzeug, ein Luftfahrzeug wie beispielsweise ein Flugzeug, oder ein Wasserfahrzeug wie beispielsweise ein Schiff handeln.

Weitere Einzelheiten und Vorteile der Erfindung ergeben sich aus den nachfolgend anhand der Figuren beschriebenen Ausführungsbeispielen. In den Figuren zeigen:
- Figur 1:: eine schematische Darstellung einer Ausführungsform einer erfindungsgemäßen Klimaanlage; und
- Figur 2:: eine schematische Darstellung einer weiteren Ausführungsform einer erfindungsgemäßen Klimaanlage.

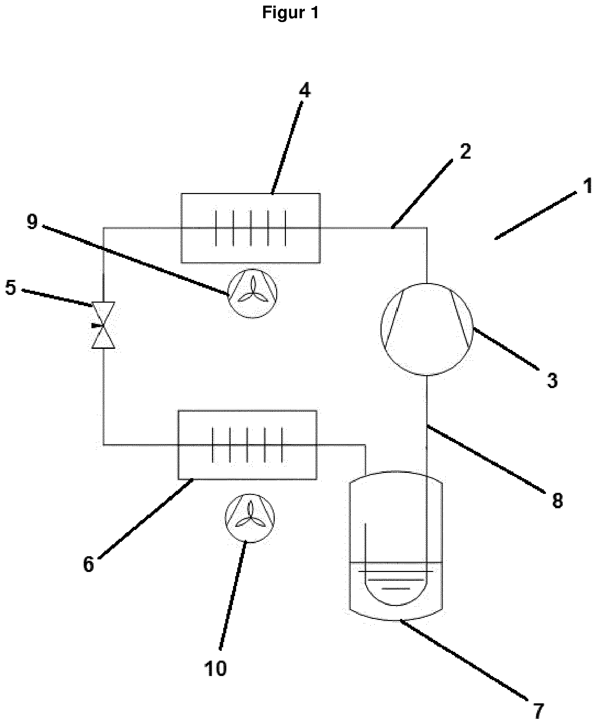

Figur 1 zeigt einen Kältemittelkreislauf einer erfindungsgemäßen Klimaanlage, der allgemein mit dem Bezugszeichen 1 gekennzeichnet ist. Die Klimaanlage ist auf dem Dach eines in der Figur nicht näher dargestellten Zugs verbaut.

Der Kältemittelkreislauf 1 umfasst ein Rohrleitungssystem 2 mit einem Kompressor 3, einem Außenwärmetauscher 4, einem elektronisch gesteuerten aktiven Drosselventil 5, einem Innenwärmetauscher 6, einem Flüssigkeitsabscheider 7 und einem Saugrohr 8. Parallel zum Drosselventil 5 verläuft eine in der Figur nicht dargestellte dünne Kapillare, die dem Druckausgleich bei Stillstand der Anlage dient.

Der Außenwärmetauscher 4 steht in thermischer Verbindung mit der Umgebung des Zugs und gibt im Kühlbetrieb Wärme an die Umgebung ab. Zur Verbesserung des Wärmeaustauschs mit der Umgebung ist dem Außenwärmetauscher 4 ein Außenventilator 9 zugeordnet. Der Innenwärmetauscher 6 steht in thermischer Verbindung mit dem Fahrgastraum des Zugs und nimmt im Kühlbetrieb Wärme aus dem Fahrgastraum auf. Zur Verbesserung des Wärmeaustauschs mit dem Fahrgastraum ist dem Innenwärmetauscher 6 ein Ventilator 10 zugeordnet, der mit einer in der Figur nicht dargestellten Steuereinheit in Verbindung steht und für einen erfindungsgemäßen Stillstandbetrieb ausgelegt ist, der nachfolgend noch in größerem Detail beschrieben werden wird. Der Ventilator 10 steht außerdem mit der Fahrzeugbatterie in Verbindung. Ferner ist ein in der Figur nicht dargestelltes Photovoltaikmodul mit einer Speicherbatterie vorgesehen, um den Ventilator 10 im nachfolgend im Detail beschriebenen Stillstandsbetrieb bei Verfügbarkeit mit Strom zu versorgen und die Fahrzeugbatterie zu schonen.

Der Kältemittelkreislauf 1 ist auf einen Betrieb mit CO₂ als Prozessgas bzw. Kältemittel ausgelegt. Der maximale Betriebsdruck beträgt 120 bar. Das für den Betrieb des Kältemittelkreislaufs vorgegebene Normalverhältnis des Füllgewichts an CO₂ zum Innenvolumen des Kältemittelkreislaufs 1 ist derart, dass dann kritische Drücke auftreten können, wenn die Prozessgastemperatur im gesamten Kältemittelkreislauf 65°C übersteigt. Eine derart hohe Temperatur und homogene Temperaturverteilung des Kältemittels kann sich nach längerem Stillstand des Kältemittelkreislaufs 1 einstellen.

Weiterhin umfasst die schematisch gezeigte Klimaanlage einen in der Figur nicht dargestellten Drucksensor zur Bestimmung des Innendrucks im Kältemittelkreislauf 1. Der Drucksensor steht mit der Steuereinheit in Verbindung.

Auf der Steuereinheit ist ein Algorithmus hinterlegt, der eine Aufnahme des Betriebs des Ventilators 10 bei Stillstand der Klimaanlage vorgibt, wenn nach Ablauf einer bestimmten Karenzzeit nach Abschalten der Klimaanlage der Stillstandsdruck einen Druckschwellenwert von 95 bar übersteigt. Der Stillstandsbetrieb wird so lange fortgesetzt, bis der Druckschwellenwert entweder wieder unterschritten wird oder die Klimaanlage wieder in Betrieb genommen wird. Durch den Stillstandsbetrieb kann ein kritisches Ansteigen des Stillstandsdrucks bei steigender Temperatur um eine signifikante Zeitspanne hinausgezögert werden.

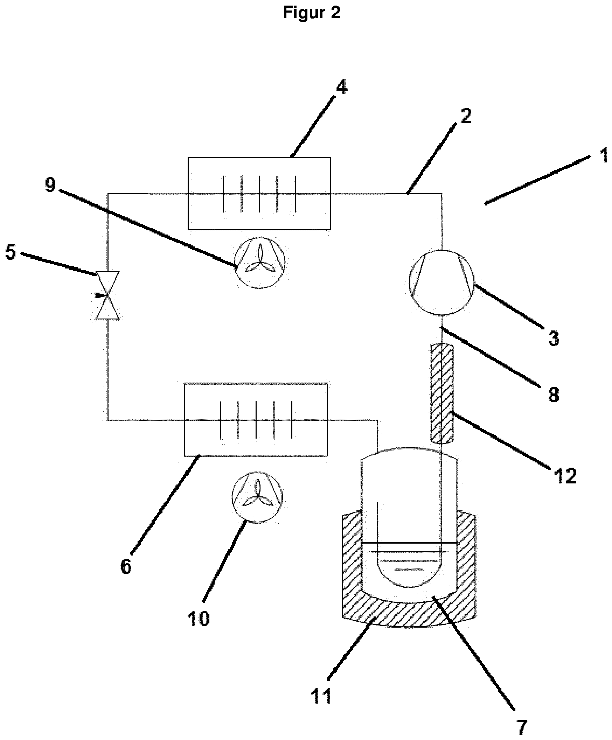

Figur 2 zeigt einen Kältemittelkreislauf 1 einer weiteren Ausführungsform einer erfindungsgemäßen Klimaanlage. Gleiche Teile sind mit gleichen Bezugszeichen versehen.

Der Unterschied zum Kältemittelkreislauf gemäß Figur 1 liegt in dieser Ausführungsform darin, dass der Flüssigkeitsabscheider 7 und das Saugrohr 8 mit thermischen Speichern 11 bzw. 12 umkleidet sind. Die thermischen Speicher 11 und 12 umfassen ein Phasenwechselmaterial in Form eines Wachses aus Kohlenwasserstoff, dessen Phasenübergangstemperatur fest/flüssig bei 55°C liegt. Der Einsatz der thermischen Speicher 11 und 12 kann ein kritisches Ansteigen des Stillstandsdrucks bei steigender Temperatur um eine signifikante Zeitspanne hinauszögern und unterstützt dabei die Verzögerung, die durch den Stillstandsbetrieb des Ventilators 10 erreicht wird.

## Patentansprüche

1. Klimaanlage für ein Fahrzeug und insbesondere ein Schienenfahrzeug mit einem Kältemittelkreislauf (1), der einen Kompressor (3), einen Außenwärmetauscher (4), eine Drossel (5) und einen Innenwärmetauscher (6) aufweist, wobei am Innenwärmetauscher (6) ein Ventilator.(10) vorgesehen ist,
**dadurch gekennzeichnet,**
**dass** die Klimaanlage so ausgebildet ist, dass der Ventilatorbetrieb bei Stillstand der Klimaanlage aufgenommen wird, wenn der Innendruck des Kältemittelkreislaufs (1) einen unterhalb des maximalen Betriebsdrucks liegenden Druckschwellenwert übersteigt.

2. Klimaanlage nach Anspruch 1, **dadurch gekennzeichnet, dass** die Klimaanlage ferner so ausgebildet ist, dass der Ventilatorbetrieb bei Stillstand der Klimaanlage aufgenommen wird, wenn die Umgebungstemperatur der Klimaanlage einen definierten Temperaturschwellenwert übersteigt.

3. Klimaanlage nach Anspruch 2, **dadurch gekennzeichnet, dass** ein Temperatursensor zur Bestimmung der Umgebungstemperatur der Klimaanlage vorgesehen ist und dass ferner eine Steuereinheit vorgesehen ist, die mit dem Ventilator (10) in Verbindung steht und so ausgebildet ist, dass der Ventilatorbetrieb bei Stillstand der Klimaanlage aufgenommen wird, wenn die Umgebungstemperatur einen definierten Temperaturschwellenwert übersteigt.

4. Klimaanlage nach einem der vorhergehenden Ansprüche, **dadurch gekennzeichnet, dass** ein Drucksensor zur Bestimmung des Innendrucks im Kältemittelkreislauf vorgesehen ist und dass ferner eine Steuereinheit vorgesehen ist, die mit dem Ventilator (10) in Verbindung steht und so ausgebildet ist, dass der Ventilatorbetrieb bei Stillstand der Klimaanlage aufgenommen wird, wenn der Innendruck einen unterhalb des maximalen Betriebsdrucks liegenden Druckschwellenwert übersteigt.

5. Klimaanlage nach einem der Ansprüche 1-3, **dadurch gekennzeichnet, dass** die Klimaanlage einen Druckschalter umfasst, der mit einer Stromversorgung des Ventilators (10) in Verbindung steht und so ausgebildet ist, dass der Ventilator (10) bestromt wird, wenn der Innendruck des Kältemittelkreislaufs (1) einen unterhalb des maximalen Betriebsdrucks liegenden Druckschwellenwert übersteigt.

6. Klimaanlage nach einem der vorhergehenden Ansprüche, **dadurch gekennzeichnet, dass** ein Photovoltaikmodul vorgesehen ist, das direkt oder über eine zwischengelagerte Batterie mit dem Ventilator (10) in Verbindung steht, wobei vorzugsweise vorgesehen ist, dass der Druckschalter an der Stromleitung zwischen Photovoltaikmodul bzw. gegebenenfalls Batterie und dem Ventilator (10) angeordnet ist.

7. Klimaanlage nach einem der vorhergehenden Ansprüche, **dadurch gekennzeichnet, dass** es sich bei der Drossel (5) um ein Expansionsventil handelt und dass der Kältemittelkreislauf (1) eine Kapillare aufweist, die parallel zum Expansionsventil angeordnet ist.

8. Klimaanlage nach einem der vorhergehenden Ansprüche, **dadurch gekennzeichnet, dass** die Klimaanlage ferner so ausgebildet ist, dass der Ventilatorbetrieb bei Stillstand der Klimaanlage auch dann aufgenommen wird, wenn der Innendruck einen unteren Druckgrenzwert unterschreitet.

9. Klimaanlage nach einem der Ansprüche 1 bis 6, **dadurch gekennzeichnet, dass** der Kältemittelkreislauf zumindest abschnittsweise mit einem thermischen Speicher (11, 12) in Kontakt steht, wobei vorzugsweise vorgesehen ist, dass Abschnitte des Kältemittelkreislaufs mit einem thermischen Speicher (11, 12) umkleidet sind.

10. Klimaanlage nach Anspruch 9, **dadurch gekennzeichnet, dass** der thermische Speicher (11, 12) ein thermisches Speichermaterial und vorzugsweise ein Phasenwechselmaterial umfasst, wobei vorzugsweise vorgesehen ist, dass die Phasenübergangstemperatur fest/flüssig des Phasenwechselmaterials zwischen 50°C und 65°C liegt.

11. Klimaanlage nach einem der Ansprüche 7 bis 9, **dadurch gekennzeichnet, dass** auch oder ausschließlich solche Abschnitte des Kältemittelkreislaufs (1) mit dem thermischen Speicher (11, 12) in Kontakt stehen oder umkleidet sind, die im Niederdruckbereich des Kältemittelkreislaufs (1) liegen, vorzugsweise zwischen Wärmetauscher (4) und Saugseite des Kompressors (3).

12. Fahrzeug und insbesondere Schienenfahrzeug mit einer Klimaanlage nach einem der vorhergehenden Ansprüche.

## Claims

1. Air conditioning system for a vehicle and in particular a rail vehicle with a refrigerant circuit (1), which comprises a compressor (3), an external heat exchanger (4), a throttle (5) and an internal heat exchanger (6), wherein a fan (10) is provided on the internal heat exchanger (6),
**characterised in that**
the air conditioning system is configured in such a way that fan operation is started when the air conditioning system is stopped if the internal pressure of the refrigerant circuit (1) exceeds a pressure threshold value below the maximum operating pressure.

2. Air conditioning system according to claim 1, **characterised in that** the air conditioning system is further configured in such a way that fan operation is started when the air conditioning system is stopped if the ambient temperature of the air conditioning system exceeds a defined temperature threshold value.

3. Air conditioning system according to claim 2, **characterised in that** a temperature sensor is provided for determining the ambient temperature of the air conditioning system and that a control unit is further provided, which is connected to the fan (10) and is configured in such a way that fan operation is started when the air conditioning system is stopped if the ambient temperature exceeds a defined temperature threshold value.

4. Air conditioning system according to any one of the preceding claims, **characterised in that** a pressure sensor is provided for determining the internal pressure in the refrigerant circuit and that a control unit is further provided, which is connected to the fan (10) and is configured in such a way that fan operation is started when the air conditioning system is stopped if the internal pressure exceeds a pressure threshold value below the maximum operating pressure.

5. Air conditioning system according to any one of claims 1-3, **characterised in that** the air conditioning system comprises a pressure switch, which is connected to a power supply of the fan (10) and is configured in such a way that the fan (10) is energised if the internal pressure of the refrigerant circuit (1) exceeds a pressure threshold value below the maximum operating pressure.

6. Air conditioning system according to any one of the preceding claims, **characterised in that** a photovoltaic module is provided, which is connected directly or by way of an intermediately supported battery to the fan (10), wherein it is preferably provided that the pressure switch is arranged on the power line between the photovoltaic module or any battery and the fan (10).

7. Air conditioning system according to any one of the preceding claims, **characterised in that** the throttle (5) is an expansion valve and that the refrigerant circuit (1) comprises a capillary tube, which is arranged parallel to the expansion valve.

8. Air conditioning system according to any one of the preceding claims, **characterised in that** the air conditioning system is further configured in such a way that fan operation is started when the air conditioning system is stopped also if the internal pressure falls below a lower pressure limit value.

9. Air conditioning system according to any one of claims 1 to 6, **characterised in that** the refrigerant circuit is in contact, at least in sections, with a thermal accumulator (11, 12), wherein it is preferably provided that sections of the refrigerant circuit are covered by a thermal accumulator (11, 12).

10. Air conditioning system according to claim 9, **characterised in that** the thermal accumulator (11, 12) comprises a thermal accumulator material and preferably a phase change material, wherein it is preferably provided that the phase transition temperature solid/liquid of the phase change material is between 50°C and 65°C.

11. Air conditioning system according to any one of claims 7 to 9, **characterised in that** also or exclusively those sections of the refrigerant circuit (1) which lie in the low pressure range of the refrigerant circuit (1), preferably between heat exchanger (4) and suction side of the compressor (3), are in contact with the thermal accumulator (11, 12) or are covered.

12. Vehicle and in particular rail vehicle, comprising an air conditioning system according to any one of the preceding claims.

## Revendications

1. Système de climatisation pour un véhicule et en particulier un véhicule sur rails avec un circuit de réfrigérant (1), qui présente un compresseur (3), un échangeur de chaleur extérieur (4), un étrangleur (5) et un échangeur de chaleur intérieur (6), dans lequel un ventilateur (10) est prévu sur l'échangeur de chaleur intérieur (6),
**caractérisé en ce que**
le système de climatisation est réalisé de telle sorte que le ventilateur entre en fonctionnement à l'arrêt du système de climatisation lorsque la pression intérieure du circuit de réfrigérant (1) dépasse un seuil de valeur de pression situé en dessous de la pression de fonctionnement maximale.

2. Système de climatisation selon la revendication 1, **caractérisé en ce que** le système de climatisation est réalisé en outre de telle sorte que le ventilateur entre en fonctionnement à l'arrêt du système de climatisation lorsque la température ambiante du système de climatisation dépasse une valeur de seuil de température définie.

3. Système de climatisation selon la revendication 2, **caractérisé en ce qu'**un capteur de température est prévu pour définir la température ambiante du système de climatisation, et qu'en outre est prévue une unité de commande, qui est reliée au ventilateur (10) et est réalisée de telle sorte que le ventilateur entre en fonctionnement à l'arrêt du système de climatisation lorsque la température ambiante dépasse une valeur de seuil de température définie.

4. Système de climatisation selon l'une quelconque des revendications précédentes, **caractérisé en ce qu'**un capteur de pression est prévu pour définir la pression intérieure dans le circuit de réfrigérant, et qu'en outre est prévue une unité de commande, qui est reliée au ventilateur (10) et est réalisée de telle sorte que le ventilateur entre en fonctionnement à l'arrêt du système de climatisation lorsque la pression intérieure dépasse une valeur de seuil de pression située sous la pression de fonctionnement maximale.

5. Système de climatisation selon l'une quelconque des revendications 1 - 3, **caractérisé en ce que** le système de climatisation comprend un commutateur de pression, qui est relié à une alimentation électrique du ventilateur (10) et est réalisé de telle sorte que le ventilateur (10) est alimenté en courant lorsque la pression intérieure du circuit de réfrigérant (1) dépasse une valeur de seuil de pression située en dessous de la pression de fonctionnement maximale.

6. Système de climatisation selon l'une quelconque des revendications précédentes, **caractérisé en ce qu'**est prévu un module photovoltaïque, qui est relié au ventilateur (10) directement ou par l'intermédiaire d'une batterie intercalée, dans lequel de préférence il est prévu que le commutateur de pression est disposé sur le câble électrique entre le module photovoltaïque et éventuellement la batterie et le ventilateur (10).

7. Système de climatisation selon l'une quelconque des revendications précédentes, **caractérisé en ce que** l'étrangleur (5) est une soupape de détente, et que le circuit de réfrigérant (1) présente un capillaire, qui est disposé de manière parallèle à la soupape de détente.

8. Système de climatisation selon l'une quelconque des revendications précédentes, **caractérisé en ce que** le système de climatisation est réalisé en outre de telle sorte que le ventilateur entre également en fonctionnement à l'arrêt du système de climatisation lorsque la pression intérieure ne dépasse pas une valeur limite de pression inférieure.

9. Système de climatisation selon l'une quelconque des revendications 1 à 6, **caractérisé en ce que** le circuit de réfrigérant est en contact au moins par endroits avec un accumulateur thermique (11, 12), dans lequel il est prévu de préférence que des sections du circuit de réfrigérant soient habillées d'un accumulateur thermique (11, 12).

10. Système de climatisation selon la revendication 9, **caractérisé en ce que** l'accumulateur thermique (11, 12) comprend un matériau accumulateur thermique et de préférence un matériau à changement de phase, dans lequel il est prévu de préférence que la température de transition de phase solide/liquide du matériau à changement de phase se situe entre 50 °C et 65 °C.

11. Système de climatisation selon l'une quelconque des revendications 7 à 9, **caractérisé en ce qu'**également ou exclusivement des sections de ce type du circuit de réfrigérant (1) sont en contact avec ou sont habillés de l'accumulateur thermique (11, 12), lesquelles se situent dans la plage basse pression du circuit de réfrigérant (1), de préférence entre l'échangeur de chaleur (4) et le côté d'aspiration du compresseur (3).

12. Véhicule et en particulier véhicule sur rails avec un système de climatisation selon l'une quelconque des revendications précédentes.
